# FASCICULE DE BREVET EUROPEEN

(11) **EP 0 667 000 B1**
(45) Date de publication et mention de la délivrance du brevet: **28.05.1997**
(21) Numéro de dépôt: 93924059.4
(22) Date de dépôt: 27.10.1993
(51) Int. Cl.: G02B 26/00

(54) **MODULATEUR OPTIQUE**
OPTISCHER MODULATOR
OPTICAL MODULATOR

(30) Priorité: 28.10.1992 LU 88184
(43) Date de publication de la demande: 16.08.1995
(73) Titulaire: COMMUNAUTE ECONOMIQUE EUROPEENNE (CEE), L-2920 Luxembourg (LU)
(72) Inventeur: COUTSOMITROS, Constantin, I-21020 Ranco (IT)
(74) Mandataire: Weinmiller, Jürgen
(86) Numéro de dépôt international: EP9302977
(87) Numéro de publication internationale: WO9410598

(56) Documents cités:
- DE-A- 691 293
- DE-A- 3 530 167
- PATENT ABSTRACTS OF JAPAN vol. 15, no. 005 (P-1149)8 Janvier 1991 & JP,A,02 254 405 (MATSUSHITA) 15 Octobre 1990

## Description

L'invention se réfère à un modulateur optique permettant de moduler un pinceau cohérent de lumière par un signal optique.

Il est connu qu'on peut moduler un signal optique par un signal électrique, par exemple une cellule de Pockels, ou par un signal mécanique, tel qu'un diaphragme ou un miroir basculant. La lumière ayant une importance croissante en télécommunication et dans le traitement de données, on cherche des méthodes permettant de moduler un signal optique par un autre signal optique. Or, les résultats obtenus par des cristaux photoréfractifs au niveau du laboratoire restent à être confirmés dans la pratique.

L'invention a pour but de proposer un modulateur optique, dont le signal modulant est également optique. Selon l'invention ce but est atteint par un modulateur optique tel que défini dans la revendication principale.

En ce qui concerne des caractéristiques préférées d'un exemple de réalisation de ce modulateur, référence est faite aux revendications secondaires.

L'invention sera décrite ci-après plus en détail à l'aide de trois figures.

La figure 1 montre en perspective la disposition des éléments constituant le modulateur selon l'invention.

La figure 2 montre deux substrats d'une cavité optique utilisés dans le modulateur selon la figure 1.

La figure 3 montre schématiquement comment les réseaux interférométriques tridimensionnels sont enregistrés sur les substrats de la cavité optique.

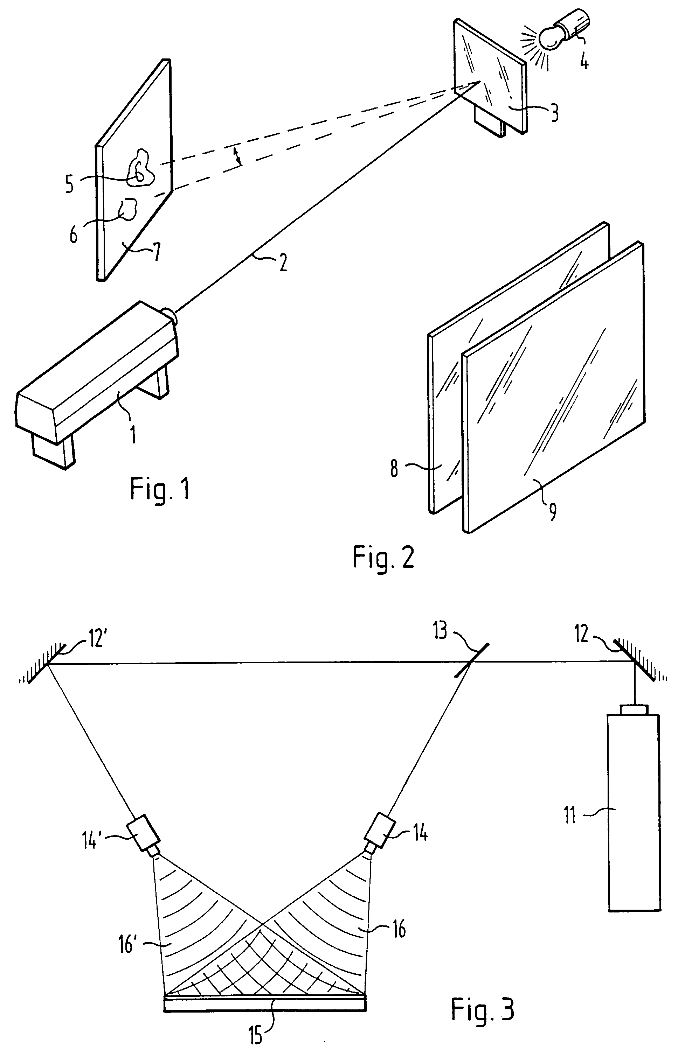

Le modulateur selon la figure 1 comporte un générateur laser 1 qui émet un pinceau cohérent de lumière 2 d'une dimension transversale très réduite vers une cavité optique 3. La nature de cette cavité optique sera décrite ci-après plus en détail à l'aide de la figure 2. La face de cette cavité 3 qui est opposée à celle qui est frappée par le pinceau 2 est susceptible d'être illuminée par une source 4 de modulation, qu'elle soit une source de lumière blanche ou une source cohérente.

Comme on le voit sur la figure 2, la cavité optique 3 comporte deux plaques holographiques 8 et 9, chacune constituée par un substrat en verre qui porte sur une face une émulsion photographique sur laquelle on a préalablement enregistré un réseau interférométrique tridimensionnel tel que par exemple une lentille holographique. Les deux enregistrements sont identiques. Les émulsions sont pour l'une des plaques 8 disposées sur la face en regard de l'autre plaque 9, alors que pour cette autre plaque 9, l'émulsion est disposée du côté opposé à la première plaque 8. Les deux plaques ont une épaisseur de l'ordre 1 à 4 mm et une forme extérieure rectangulaire ou carrée, dont un côté mesure entre 10 et 40 cm. Sur la figure 2, les deux plaques ont été représentées à distance mutuelle, pour rendre plus clair la disposition des émulsions, mais en réalité les plaques sont apppliquées l'une sur l'autre en ne laissant subsister que très peu d'air entre les deux substrats. Cette faible quantité d'air définit, avec les plaques, la cavité optique proprement dite.

La figure 3 montre schématiquement comment les lentilles holographiques sont enregistrées sur un substrat 15 portant une photoémulsion. Un laser 11 envoie un faisceau cohérent, le cas échéant par un miroir 12, sur un séparateur de faisceaux 13 constitué par un miroir semi-réfléchissant. Un des faisceaux est directement dirigé par l'intermédiaire d'un filtre spatial 14 sur le substrat 15, alors que l'autre est renvoyé par un second miroir 12' vers un second filtre spatial 14' pour atteindre le substrat 15 selon un autre angle d'incidence. Les ondes sphériques des faisceaux divergents 16 et 16' créent en coopération le réseau tridimensionnel dans l'émulsion sur le substrat 15 qu'il faut alors développer et fixer. Les deux plaques 8 et 9 de la figure 2 sont préparés de la même façon et sont alors réunis pour constituer la cavité optique 3 de la figure 1.

Lorsqu'on envoie le pinceau 2 sur la cavité optique, on crée localement un micro-réseau de franges d'interférence sur la couche d'air qui se trouve entre les deux plaques, franges qu'on peut faire visualiser par réflexion de la lumière du laser 1 de la cavité 3 sur un écran 7. En appliquant alors un signal modulant par la source 4 sur le dos de la dite cavité 3, qu'il soit en lumière cohérente ou blanche, les deux plaques se mettent en micro-mouvement (par effet de la pression de radiation ou de l'effet photothermique ou un mélange des deux) et ils changent l'épaisseur du film d'air. Ceci correspond à un changement de l'indice de réfraction, et donc les franges d'interférence se mettent en mouvement. Ce mouvement des franges d'interférence est linéaire par rapport aux signaux appliqués. En considérant isolément une frange 5 sur l'écran qui s'établit en absence de lumière de la source 4, cette frange se déforme et se déplace vers l'endroit 6, lorsqu'on applique une certaine intensité de lumière par la source 4.

Chaque fois qu'on stabilise l'intensité du signal optique de la source 4, les franges d'interférence prennent une nouvelle configuration constante, et si on élimine la source modulante complètement, les franges reprennent la configuration initiale.

La sensibilité du système s'accroît avec les dimensions linéaires de la cavité optique. Ce résultat a été vérifié avec des supports rectangulaires dont un côté mesure entre 10 et 40 cm.

En variante, il est possible de diriger la lumière de modulation de la source 4 sur la même face de la cavité optique 3 que le faisceau 2. En outre, le modulateur selon l'invention peut recevoir simultanément plusieurs faisceaux tels que le faisceau 2 qui sont alors modulés en synchronisme, mais avec des rapports de phase quelconques.

Malgré la grande taille de cette cavité, le modulateur est extrêmement rapide et permet par exemple de réagir sur une impulsion émise de la source 4 ayant une durée de 12 nanose-condes.

A la place de l'écran, on prévoit dans un modulateur tout optique un organe de réception de lumière à faible étendue géométrique qui reçoit soit de la lumière réfléchie par la cavité optique, soit rien, en fonction de la répartition des franges sur l'écran 7. Dans ce cas, le modulateur est alors un modulateur binaire (cas bistable). Mais il est également possible d'exploiter toute la gamme des intensités incidant sur l'écran en faisant varier en continu l'intensité de la source 4 (cas multistable).

Le modulateur selon l'invention peut trouver des applications dans le domaine des ordinateurs optiques comme commutateur binaire ou multi-stable et dans les télécommunications optiques pour traiter un signal.

## Revendications

1. Modulateur optique permettant de moduler un pinceau cohérent de lumière (2) par un signal optique (4), caractérisé en ce qu'il comporte une cavité optique (3) composée de deux substrats en verre superposés (8, 9), chacun portant un réseau interférométrique tridimensionnel, ledit pinceau cohérent (2) étant susceptible d'être dirigé sur une première face de ladite cavité (3), alors que ledit signal optique de modulation (4) est dirigé contre cette première face ou la face opposée de cette cavité, le signal de sortie de ce modulateur étant constitué par ledit pinceau après réflexion sur ladite cavité optique (3).

2. Modulateur selon la revendication 1, caractérisé en ce que lesdits réseaux interférométriques sont identiques et sont inscrits dans des émulsions photographiques sur une face respective de chaque substrat (8, 9) tel que l'émulsion d'un substrat est sur sa face en regard de l'autre substrat et l'émulsion de l'autre substrat est sur sa face opposée.

3. Modulateur selon l'une des revendications précédentes, caractérisé en ce que chaque réseau interférométrique tridimensionnel est constitué par une lentille holographique.

4. Modulateur selon l'une des revendications précédentes, caractérisé en ce que le pinceau réfléchi est reçu sur une diode ou un photomultiplicateur.

## Patentansprüche

1. Optischer Modulator, der es ermöglicht, einen kohärenten Lichtstrahl (2) durch ein optisches Signal (4) zu modulieren, dadurch gekennzeichnet, daß er einen optischen Hohlraum (3) bestehend aus zwei übereinanderliegenden Glassubstraten (8, 9) aufweist, die je ein dreidimensionales interferometrisches Netz tragen, wobei der kohärente Strahl (2) auf eine erste Seite des Hohlraums (3) gelenkt werden kann, während das optische Modulationssignal (4) auf diese erste Seite oder die entgegengesetzte Seite dieses Hohlraums gelenkt wird, und wobei das Ausgangssignal dieses Modulators aus dem Strahl nach Reflexion am optischen Hohlraum (3) besteht.

2. Modulator nach Anspruch 1, dadurch gekennzeichnet, daß die interferometrischen Netze identisch und in photographische Emulsionen auf einer Seite jedes Substrats (8, 9) derart eingetragen sind, daß die Emulsion des einen Substrats sich auf dessen dem anderen Substrat zugewandten Seite und die Emulsion des anderen Substrats sich auf dessen entgegengesetzter Seite befindet.

3. Modulator nach einem der vorhergehenden Ansprüche, dadurch gekennzeichnet, daß jedes dreidimensionale interferometrische Netz aus einer holographischen Linse besteht.

4. Modulator nach einem der vorhergehenden Ansprüche, dadurch gekennzeichnet, daß der reflektierte Strahl von einer Diode oder einem Photomultiplizierer empfangen wird.

## Claims

1. An optical modulator for modulating a coherent light beam (2) by an optical signal (4), characterized in that it comprises an optical cavity (3) composed of two superposed glass substrates (8, 9) each carrying a three-dimensional interferometric lattice, said coherent light beam (2) being susceptible to be directed onto a first surface of said cavity (3), whereas said optical modulation signal (4) is directed against said first surface or the opposite surface of this cavity, the output signal of this modulator being constituted by said beam after reflection on said optical cavity (3).

2. A modulator according to claim 1, characterized in that said interferometric lattices are identical and are recorded in photographic emulsions on a respective surface of each substrate (8, 9) such that the emulsion of one substrate is disposed on its surface facing the other substrate and the emulsion of the other substrate is on its opposite surface.

3. A modulator according to one of the preceding claims, characterized in that each three-dimensional interferometric lattice is constituted by a holographic lens.

4. A modulator according to one of the preceding claims, characterized in that the reflected beam is received on a diode or a photomultiplier.
